Europäisches Patentamt

European Patent Office

Office européen des brevets

(19)

(11) Veröffentlichungsnummer: **0 259 610**
**B1**

(12) **EUROPÄISCHE PATENTSCHRIFT**

(45) Veröffentlichungstag der Patentschrift:
24.10.90

(21) Anmeldenummer: 87111320.5

(22) Anmeldetag: 05.08.87

(51) Int. Cl.⁵: **G01F 1/68**

(54) Hitzdrahtsensor zur integralen Messung von Stoff- oder Volumenströmen.

(30) Priorität: 06.09.86 DE 3630427

(43) Veröffentlichungstag der Anmeldung:
16.03.88 Patentblatt 88/11

(45) Bekanntmachung des Hinweises auf die Patenterteilung:
24.10.90 Patentblatt 90/43

(84) Benannte Vertragsstaaten:
DE FR GB SE

(56) Entgegenhaltungen:
EP-A- 0 008 185
DE-A- 2 729 743
GB-A- 2 068 565

EXPERIMENTS IN FLUIDS, Band 2, Nr. 1, 1984,
Seiten 33-41, Springer Verlag, Berlin, DE; A.J. SMITS et
al.: "Constant temperature hot-wire anemometer
practice in supersonic flows"

(73) Patentinhaber: Drägerwerk Aktiengesellschaft,
Moislinger Allee 53-55, D-2400 Lübeck 1(DE)

(72) Erfinder: Kiske, Siegfried, Dr. Dipl.-Ing., Am
Sonnenberg 1e, D-2401 Gross Grönau(DE)

## Beschreibung

Die Erfindung betrifft einen Hitzdrahtsensor nach den Oberbegriffen der Ansprüche 1 und 2.

Hitzdrahtsensoren werden in verschiedener Anordnung, beispielsweise nach der DE-OS 2 729 743 zur Messung der Strömungsgeschwindigkeit von Gasen oder nach der DE-PS 2 505 689 zur Messung der Wärmeleitfähigkeit eines Gasgemisches verwendet. Aus der Messung der Geschwindigkeit an einer bestimmten Stelle in einem Rohr kann auf den Stoff- oder Volumendurchsatz geschlossen werden. Dies ist dann mit hoher Genauigkeit möglich, wenn das Verhältnis von gemessener Geschwindigkeit und gemittelter Durchflußgeschwindigkeit eine Konstante oder wenigstens eine bekannte Funktion der Meßgröße ist. Um dies zu erreichen sind jedoch entweder sehr lange Beruhigungsstrecken oder starke Kontraktionen des Strömungskanals bzw. andere Vorrichtungen zur Erzeugung einer gleichmäßigen Strömung erforderlich. Diese bedingen im allgemeinen zusätzliche Strömungsverluste.

Eine Anordnung zur Messung der Geschwindigkeit und Richtung eines Gasstromes, insbesondere zum Ermitteln der Vertikalgeschwindigkeit von Luftfahrzeugen, ist durch die DE-AS 1 523 270 vorbekannt. Bei dieser Ausbildung besteht die Meßsonde aus zwei aneinanderliegenden, freitragenden kegelstumpfförmigen Wicklungen, welche als Widerstandssensoren in eine elektrische Brückenschaltung eingesetzt sind.

In der GB-A 2 068 565 ist ein Sensor zur Bestimmung des Massenstroms eines fluiden Mediums in einem rohrförmigen Strömungsleiter dargestellt, bei dem ein Hitzdraht, in seinem Durchmesser klein im Verhältnis zum Rohrdurchmesser, aus zwei Teilstücken besteht, die jeweils für sich unter einem voneinander verschiedenen Winkel in bezug auf die Rohrlängsachse angestellt sind. In einem Ausführungsbeispiel hierzu besteht der Hitzdraht aus mehreren gekrümmten Teilstücken.

Aus der EP-A 8 185 ist ein Strömungsmesser nach dem Prinzip der Hitzdrahtanemometrie bekannt, bei dem der Hitzdraht aus mehreren, in bezug auf die Rohrlängsachse unterschiedlich angestellten und in verschiedener Winkellage zueinander zusammengesetzten Teilstücken besteht.

Die Erfindung geht von der Aufgabenstellung aus, Hitzdrahtsensoren anzugeben, mit deren Hilfe eine angemessene Berücksichtigung der Geschwindigkeitsverteilung in einem Strömungskanal mit vorzugsweise kreisförmigem Querschnitt zur Integration der Geschwindigkeitsverteilung und damit zur genauen Messung von Stoff- oder Volumenströmen in Rohren möglich ist.

In einem Kreisrohr mit dem Radius R bestimmt sich die räumlich gemittelte Geschwindigkeit einer rotationssymmetrischen Strömung aus der Beziehung:

$$(1) \quad \bar{u}_{real} = \frac{1}{\pi R^2} \int_0^R u(r) \cdot 2\pi r\, dr = 2 \cdot \int_0^1 u\left(\frac{r}{R}\right) \cdot \frac{r}{R} \cdot d\left(\frac{r}{R}\right)$$

Dabei bedeuten U(r) die zu einem Radiuselement r zugehörige Geschwindigkeit u und $\bar{u}_{real}$ die mittlere Geschwindigkeit über den Gesamtradius R, welche z.B. der Berechnung des Volumendurchsatzes zugrundegelegt werden kann.

Die Integration eines im Kreisrohr angeordneten dünnen zylindrischen Hitzdrahtes liefert:

$$(2) \quad \bar{u}_{mess} = 2 \int_0^1 u\left(\frac{r}{R}\right) \cdot \cos\alpha\left(\frac{r}{R}\right) \cdot d\left(\frac{r}{R}\right)$$

Hierbei bedeutet

$$\alpha\left(\frac{r}{R}\right)$$

einen von r abhängigen Winkel zwischen R Strömungsvektor und Hitzdrahtnormalen. Durch Gleichsetzen von (2) und (1) ergibt sich eine Bestimmungsgleichung für den Winkel $\alpha$.

$$\cos\alpha = \frac{r}{R} \quad \text{bzw.} \quad \alpha = \arccos\left(\frac{r}{R}\right)$$

Diese Beziehung ermöglicht den Aufbau von Hitzdrahtsensoren, welche eine integrale Bestimmung eines die rotationssymmetrische Strömung kennzeichnenden mittleren Geschwindigkeitswertes ermöglichen.

Die erfindungsgemäße Ausbildung des Hitzdrahtsensors sieht gemäß einer ersten Ausführungsform vor, daß der Hitzdraht gegenüber der Rohrlängsachse angestellt ist. Die Bezeichnung "angestellt" soll dabei ausdrücken, daß der in einer radialen Ebene liegende Hitzdraht bzw. seine Längsabschnitte einen abschnittsweise veränderbaren Anstellwinkel gegenüber der Rohrlängsachse aufweisen. Diese Ausbildung ermöglicht eine genaue Messung der mittleren Strömungsgeschwindigkeit, aus der verschiedene weitere Meßgrößen, beispielsweise die Volumenströmung, durch Umrechnung mit bekannten Parametern abgeleitet werden können.

Der Hitzdrahtsensor weist zwei zur Rohrlängsachse angestellte symmetrische Teilstücke auf, welche im Bereich der Rohrlängsachse eine Spitze bilden. Dabei kann der Hitzdraht aus geraden Abschnitten oder durchgehend gekrümmten Teilstücken zusammengesetzt sein.

Die gekrümmte Ausführung der Teilstücke ist dabei so gestaltet, daß der Verlauf dieser Teilstücke in bezug auf die Rohrlängsachse eine Form aufweist, welche durch eine arccos-Funktion beschrieben werden kann. Anstelle eines einzelnen Hitzdrahtes aus zwei Teilstücken können zweckmäßig auch mehrere Hitzdrähte in verschiedener gegenseitiger Winkellage der radialen Ebenen im Strömungsquerschnitt angeordnet sein.

Bei einer rotationssymmetrischen Geschwindigkeitsverteilung in einem Strömungsrohr wird der Hitzdrahtsensor somit gemäß dem hergeleiteten arccos-Gesetz so gegen die Strömung angestellt, daß er abschnittsweise eine unterschiedliche Empfindlichkeit besitzt, die vom Radius abhängt und die dem Durchflußflächenelement $2\pi \cdot r \cdot dr$ proportional ist. Damit integriert der Hitzdrahtsensor das Strömungsprofil flächenmäßig. Es ist dabei unerheblich, ob es sich um ein parabelförmiges, hyperbelförmiges oder um ein anderes geartetes Strömungsprofil handelt, solange nur eine rotationssymmetrische Geschwindigkeitsverteilung vorliegt.

Der Hitzdrahtsensor ergibt auch dann den richtigen Volumendurchsatz, wenn die Strömung im Randbereich höher ist als im Mittelbereich. Das Meßkriterium des erfindungsgemäßen Hitzdrahtsensors ist somit nicht die Strömungsgeschwindigkeit allein, sondern der von den Strömungsvektoren durchsetzte Durchflußflächenteil.

Das Grundprinzip der Erfindung wird gemäß der ersten Ausführungsform darin gesehen, daß der Hitzdrahtsensor im wandnahen Bereich einen höheren Anstellwinkel (bis zur Vertikallage zur Rohrlängsachse) aufweist und dadurch von der Strömung stärker beeinflußt wird, als im Mittelbereich der Rohrlängsachse, wobei dort ein geringerer Anstellwinkel (bis zur Parallellage zur Rohrlängsachse) den Einfluß der geringeren Durchflußflächen in diesem Bereich darstellt.

Ausgehend von den gleichen Überlegungen, wonach die wand nahen Bereiche mit größeren Durchflußflächen einen höheren Einfluß auf den Hitzdraht ausüben sollen als die Bereiche um die Rohrlängsachse, in denen die kleineren Durchflußflächenteile liegen, kann auch eine alternative Ausbildung der Erfindung dadruch erreicht werden, daß der Hitzdraht symmetrisch zur Rohrmittelachse unterschiedliche Dicke aufweist, wobei die Abschnitte größerer Dicke im wandnahen Bereich liegen.

Dadurch wird mit Hilfe der dicken Abschnitte eine höhere Beeinflussung durch die Anteile der Strömung im wandnahen Bereich erreicht, während die dünnen Mittelabschnitte entsprechend unempfindlich reagieren.

Dabei kann es ebenfalls zweckmäßig sein, in verschiedener Winkellage mehrere Hitzdrähte im Rohrquerschnitt anzuordnen.

Im allgemeinen erscheint die Ausbildung mit gegenüber der Rohrlängsachse angestelltem Hitzdraht, der einen gleichmäßigen Durchmesser aufweist, technisch leichter realisierbar.

Das beschriebene Prinzip kann bevorzugt bei kreisförmigem Querschnitt, aber gegebenenfalls und mit annähernd ähnlichen Ergebnissen auch bei eckigen und sonstigen symmetrischen Querschnitten angewendet werden.

Durch die Anwendung der Merkmale der Erfindung wird ein Hitzdrahtsensor erzielt, der bei einfachem Gesamtaufbau eine gute Integrationswirkung über die im Rohrquerschnitt gegebene Geschwindigkeitsverteilung ermöglicht und daher als Meßwert eine mittlere Geschwindigkeit liefert, die eine genaue integrale Messung von Stoff- oder Volumenströmen ermöglicht.

In der Zeichnung ist ein Ausführungsbeispiel des Gegenstandes der Erfindung schematisch dargestellt; es zeigen:

Fig. 1 einen Längsschnitt durch ein Kreisrohr mit angestelltem Hitzdraht,
Fig. 2 einen Längsschnitt nach Fig. 1 mit einem Hitzdraht unterschiedlicher Dicke.

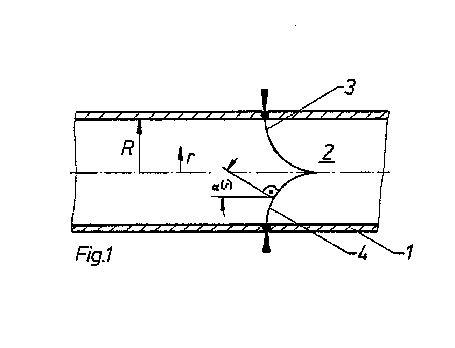

Bei der Ausführungsform nach Fig. 1 ist in einem Kreisrohr 1 ein Hitzdraht 2 angeordnet, welcher aus zwei zur Rohrlängsachse symmetrisch liegenden gekrümmten Teilstücken 3,4 zusammengesetzt ist, die sich im Bereich der Rohrlängsachse in einer Spitze vereinigen. Die Lage dieser Spitze kann zweckmäßig in die Strömungsrichtung weisen. Eine alternative Ausführung ist jedoch auch mit entgegen der Strömungsrichtung weisender Spitze möglich. Die Teilstücke 3,4 sind annähernd so gekrümmt, daß der Verlauf der arccos-Funktion realisiert wird.

Der Rohrinnenradius R und der Radius r eines unter dem Winkel α angestellten Längenelementes des Teilstücks 3 sind eingezeichnet.

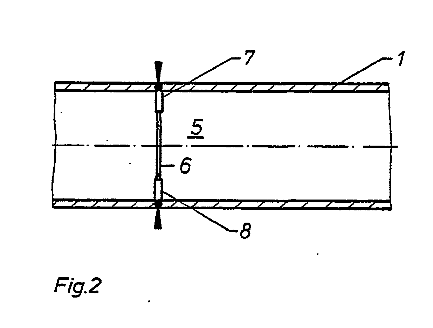

Bei der Ausführung nach Fig. 2 befindet sich innerhalb des Kreisrohrs 1 ein Hitzdraht 5, welcher aus einem Mittelabschnitt 6 geringerer Dicke und zwei wandnahen Abschnitten 7,8 von größerer Dicke zusammengesetzt ist.

## Patentansprüche

1. Hitzedrahtsensor zur integralen Messung von Stoff- oder Volumenströmen in einem Rohr (1), in dem wenigstens ein Hitzdraht (2, 5) mit einem Durchmesser, welcher klein ist im Verhältnis zum Rohrdurchmesser, angeordnet ist, der zwei zur Rohrlängsachse angestellte, symmetrische Teilstücke (3, 4) aufweist, die im Bereich der Rohrlängsachse eine Spitze bilden, dadurch gekennzeichnet, daß die Teilstücke (3, 4) in bezug auf die Rohrlängsachse und den Radius des Rohres eine durch die arccos-Funktion beschreibbare Form aufweisen.

2. Hitzedrahtsensor zur integralen Messung von Stoff- oder Volumenströmen in einem Rohr (1), wobei in dem Rohr (1) wenigstens ein Hitzdraht (5) mit einem Durchmesser, welcher klein ist im Verhältnis zum Rohrdurchmesser, angeordnet ist, dadurch gekennzeichnet, daß der Hitzdraht (5) symmetrisch zur Rohrlängsachse unterschiedliche Dicke aufweist, wobei die Abschnitte größerer Dicke (7, 8) im wandnahen Bereich liegen.

3. Hitzdrahtsensor nach Anspruch 2, dadurch gekennzeichnet, daß im Rohrquerschnitt mehrere Hitzdrähte in verschiedener Winkellage angeordnet sind.

## Claims

1. Hot-wire sensor for the integral measurement of substance flow or volume flow in a tube (1), wherein at least one hot-wire (2, 5) is arranged with a diameter which is small in relation to the tube diameter, which has two symmetrical sections (3, 4) placed about the tube longitudinal axis, which form a point in the region of the tube longitudinal axis, characterized in that the sections (3, 4) with reference to the tube longitudinal axis and the radius of the tube have a shape which can be described by the arccos-function.

2. Hot-wire sensor for the integral measurement of substance flow or volume flow in a tube (1), whereby in the tube (1) at least one hot-wire (5) is arranged with a diameter which is small in relation to the tube diameter, characterized in that the hot-wire (5) has varying thickness symmetric about the tube longitudinal axis, whereby the parts of greater thickness (7, 8) lie in the region near the wall.

3. Hot-wire sensor according to claim 2, characterized in that in the tube cross section there are arranged several hot-wires in varying angular position.

## Revendications

1. Capteur à fil chaud pour la mesure intégrale du débit massique ou volumique dans un tube (1) dans lequel est disposé au moins un fil chaud (2, 5) d'un diamètre inférieur au diamètre du tube, comportant deux parties (3, 4) symétriques, inclinées par rapport à l'axe longitudinal du tube et qui forment une pointe dans la région de l'axe longitudinal du tube, caractérisé en ce que les parties (3, 4) ont une forme, par rapport à l'axe longitudinal du tube et par rapport au rayon du tube, qui peut être décrite par la fonction arc cosinus.

2. Capteur à fil chaud pour la mesure intégrale du débit massique ou volumique dans un tube (1), au moins un fil chaud (5) d'un diamètre inférieur au diamètre du tube étant placé dans le tube (1), caractérisé en ce que le fil chaud (5) a une épaisseur différente, symétriquement à l'axe longitudinal du tube, les sections de plus grande épaisseur (7, 8) se situant dans la région proche de la paroi.

3. Capteur à fil chaud selon la revendication 2, caractérisé en ce qu'on place plusieurs fils chauds, dans une position angulaire différente, dans la section transversale du tube.

Fig.1

Fig.2